(19) Europäisches Patentamt
European Patent Office
Office européen des brevets

(11) Publication number: 0 000 229
B1

# (12) EUROPEAN PATENT SPECIFICATION

(45) Date of publication of patent specification: 02.12.81

(21) Application number: 78200056.6

(22) Date of filing: 20.06.78

(51) Int. Cl.[3]: C 07 C 69/74, C 07 C 121/75, A 01 N 29/02, A 01 N 31/14, A 01 N 37/08, A 01 N 37/34, A 01 N 53/00

## (54) Cyclopropyl carboxylate compounds, a process for their manufacture and their use as pesticides.

(30) Priority: 30.06.77 GB 2740977

(43) Date of publication of application: 10.01.79 Bulletin 79/1

(45) Publication of the grant of the European patent: 02.12.81 Bulletin 81/48

(84) Designated Contracting States: BE DE FR GB LU NL SE

(56) References cited:
FR - A - 2 240 914
GB - A - 1 413 491

(73) Proprietor: SHELL INTERNATIONALE RESEARCH MAATSCHAPPIJ B.V.
Carel van Bylandtlaan 30
NL-2596 HR DEN HAAG (NL)

(72) Inventor: Davies, John Hugh
53 New Dover Road
Canterbury, Kent (GB)
Inventor: Badmin, John Stewart
26 Arundel Avenue
Sittingbourne, Kent (GB)

(74) Representative: Keuzenkamp, Abraham et al,
P.O. Box 302
NL-2501 CH Den Haag (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 000 229 B1

Cyclopropyl carboxylate compounds, a process for their manufacture and their use as pesticides

This invention relates to cyclopropyl carboxylate compounds possessing pesticidal activity, to a process for their manufacture and to their use as pesticides. The compounds are related to the so-called synthetic pyrethroids.

United Kingdom Patent Specification 1,413,491 and French Patent Specification 2,240,914 disclose, *inter alia*, 3-phenoxybenzyl esters and alpha-substituted 3-phenoxybenzyl esters of 2,2-dimethyl-3-(2,2-dihalovinyl)cyclopropanecarboxylic acids; they also disclose the use of these compounds as insecticides. Whilst the high level of activity of this class of compounds against insects is disclosed, no mention is made to their activity against Acarines such as the *Ixodidae* family and the *Tetranychidae* family.

The Applicant has now found a small group of 3-phenoxybenzyl esters and alpha-substituted-3-phenoxybenzyl esters of 2,2-dimethyl-3-(2,2-dihalovinyl)cyclopropanecarboxylic acids which not only exhibit high levels of insecticidal activity but also have a significant effect on acarines, for example *Tetranychus urticae* (glasshouse red spider mite) and *Boophilus microplus* (cattle tick).

Accordingly the present invention provides cyclopropyl carboxylate compounds in the form of single isomers or combinations thereof and having the general formula:—

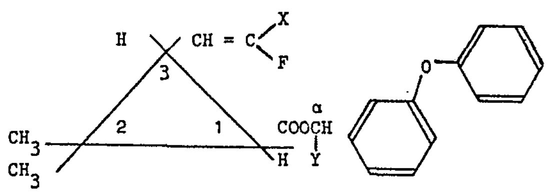

wherein X is a chlorine, bromine or iodine atom and Y is a hydrogen atom or a cyano or ethynyl group. Preferably X is a chlorine atom.

From formula I it will be apparent that the compounds according to the invention can exist in a number of stereoisomeric forms. Thus in the acid portion of the compounds, the hydrogen atoms carried by carbon atoms 1 and 3 in the cyclopropyl ring can be in a *cis* or *trans* relationship and because of asymmetrical substitution at these carbon atoms each *cis* isomer can exist in two stereoisomeric forms and each *trans* isomer can exist in two stereoisomeric forms. The absolute configuration of these four stereoisomeric forms can be satisfactorily defined using the Elliott nomenclature as defined by M. Elliott, A. W. Farnham, N. F. Janes, P. H. Needham and D. A. Pulman, Nature, 1974, *248*, 710. Thus the four stereoisomeric forms are designated (1R, *cis*), (1S, *cis*), (1R, *trans*) and (1S, *trans*).

In the acid portion of the compounds according to the invention the possibility of further stereoisomeric forms occurs by virtue of the asymmetric substitution of the vinylic double bond appearing in the substituent at position 3 on the cyclopropyl ring. The most satisfactory method of defining stereoisomerism of this kind is the E/Z nomenclature of J. E. Blackwood, C. L. Gladys, K. L. Loening, A. E. Petrarca and J. E. Rush, J.A.C.S./90:2/1968.

In the alcohol portion of the compounds according to the invention, when Y represents a cyano or ethynyl group, a further site of asymmetry occurs at the *alpha*-carbon atom carrying the Y-substituent and the absolute configuration of this carbon atom may be designated R or S in accordance with the sequence rules of R.S. Cahn, C. Ingold, and V. Prelog, Angew. Chem. Int. Ed. 5, 385 (1966). It should be noted that the Elliot *et al* nomenclature and the Blackwood *et al* nomenclature are both based on these sequence rules.

Thus the compounds according to the invention can exist in 16 stereoisomeric forms and, whilst all isomers or combinations thereof come within the scope of the invention, it has been found that compounds derived from a cyclopropyl carboxylate having a configuration at carbon atoms 1 and 3 in one of the following forms:—

(1R, 1S *cis*), or (1R, *cis*)

give rise to better activity in terms of their acaricidal and insecticidal effects.

The cyclopropyl carboxylate of formula I may be prepared by known methods. A convenient process is the reaction of a compound of formula:—

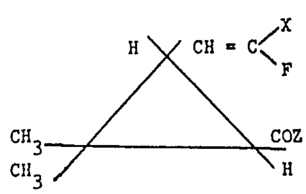

(II)

with a compound of formula:—

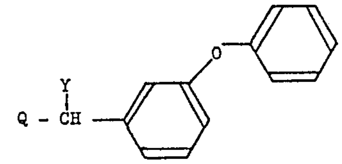

(III)

wherein X and Y are as defined hereinbefore; one of the groups Q and Z represents a halogen, preferably a chlorine or bromine atom, and the other represents a hydroxy group. The reaction is preferably carried out in the presence of a suitable base, for example a tertiary amine such as triethylamine. When a particular isomeric form of the compounds according to the invention is required the appropriate stereoisomeric starting materials should be selected. Alternatively various isomers or isomer combinations can be isolated by physical separation techniques, e.g. fractional crystallization or chromatographic methods.

The compounds of the invention are of particular interest as acaricides and insecticides and therefore the invention includes pesticidal compositions comprising a compound according to the invention, a surface-active agent and/or carrier. The invention also includes a method for combating acarid and/or insect pests at a locus which comprises applying to the locus an acaricidally-active or insecticidally-active amount of a compound or composition according to the invention.

The term "carrier" as used herein means a material, which may be inorganic or organic and of synthetic or natural origin, with which the active compound is mixed or formulated to facilitate its application to the plant, seed, soil or other object to be treated, or its storage, transport or handling. The carrier may be a solid or a fluid. Any of the material usually applied in formulating pesticides may be used as carrier.

Suitable solid carriers are natural and synthetic clays and silicates, for example natural silicas such as diatomaceous earths; magnesium silicates, for example, talcs; magnesium aluminium silicates, for example, kaolinites, montmorillinites and micas; calcium carbonates; calcium sulphate; synthetic hydrated silicon oxides and synthetic calcium or aluminium silicates; elements such as for example, carbon and sulphur; natural and synthetic resins such as for example, coumarone resins, polyvinyl chloride and styrene polymers and copolymers; solid polychlorophenols; bitumen; waxes such as for example, beeswax, paraffin wax, and chlorinated mineral waxes; and solid fertilisers, for example superphosphates.

Examples of suitable fluid carriers are water, alcohols, such as for example, isopropanol, glycols, ketones such as for example, acetone, methyl ethyl ketone, methyl isobutyl ketone and cyclohexanone; ethers; aromatic hydrocarbons, such as for example, benzene, toluene and xylene; petroleum fractions such as for example, kerosine, light mineral oils; chlorinated hydrocarbons, such as for example, carbon tetrachloride, perchloroethylene, trichloroethane, including liquefied normally vaporous gaseous compounds. Mixtures of different liquids are often suitable.

The surface-active agent may be an emulsifying agent or a dispersing agent or a wetting agent; it may be nonionic or ionic. Any of the surface-active agents usually applied in formulating herbicides or insecticides may be used. Examples of suitable surface-active agents are the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohols or alkyl phenols for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example, sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may be formulated as wettable powders, dusts, granules, solutions, emulsifiable concentrates, emulsions, suspension concentrates and aerosols, and will generally contain 0.5 to 95% w, preferably 0.5 to 75% w, of toxicant. Wettable powders are usually compounded to contain 25, 50 or 75% w, of toxicant and usually contain, in addition to solid carrier, 3—10% w of a dispersing agent and, where necessary, 0—10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing $\frac{1}{2}$—10% w of toxicant. Granules are usually prepared to have a size between 10 and 100 BS mesh (1.676—0.152 mm), and may be manufactured by agglomeration or impregnation techniques. Generally, granules will contain $\frac{1}{2}$—25% w toxicant and 0—10% w of additives such as stabilisers, slow release modifiers and binding agents. Emulsifiable concentrates usually contain, in addition to the solvent and, when necessary, cosolvent, 10—50 g/100 ml toxicant, 2—20 g/100 ml emulsifiers and 0—20 g/100 ml of appropriate

additives such as stabilisers, penetrants and corrosion inhibitors. Suspension concentrates are compounded so as to obtain a stable, non-sedimenting, flowable product and usually contain 1—75% w toxicant, 0.5—15% w of dispersing agents, 0.1—10% w of suspending agents such as protective colloids and thixotropic agents, 0—10%.w of appropriate additives such as defoamers, corrosion inhibitors, stabilisers, penetrants and stickers, and as carrier, water or an organic liquid in which the toxicant is substantially insoluble; certain organic solids or inorganic salts may be dissolved in the carrier to assist in preventing sedimentation or as anti-freeze agents for water.

The compositions of the invention may contain other ingredients, for example, protective colloids such as gelatin, glue, casein, gum, cellulose ethers, and polyvinyl alcohol; thixotropic agents e.g. bentonites, sodium polyphosphates; stabilisers such as ethylene diamine tetra-acetic acid, urea, triphenyl phosphate; other herbicides or pesticides; and stickers, for example non-volatile oils.

Aqueous dispersions and emulsions, for example, compositions obtained by diluting a wettable powder or an emulsifiable concentrate according to the invention with water, also lie within the scope of the present invention. The said emulsions may be of the water-in-oil or of the oil-in-water type, and may have a thick "mayonnaise"-like consistency.

The invention is further illustrated by reference to the following Examples:—

## Example 1

*Preparation of (RS)alpha-cyano-3-phenoxybenzyl(1S,1R,cis)(E/Z)3-(2-chloro-2-fluorovinyl)-2,2-dimethylcyclopropane-1-carboxylate*

(1S,1R,*cis*)(E/Z)-3-(2-chloro-2-fluorovinyl)-2,2-dimethyl-1-cyclopropanecarboxylic acid (0.8 g), (R,S)-*alpha*-cyano-3-phenoxybenzylbromide (1.15 g) and potassium carbonate were stirred together in acetone (25 ml) for 4 hours at room temperature. The product was treated with water and extracted with ether (3 x 25 ml). The ethereal extracts were combined and evaporated to give a crude product which was purified by chromatography using silica gel and eluent of toluene hexanone 1:1 to give the desired product $n_D^{20} = 1.551$.

*Analysis*

| | | | |
|---|---|---|---|
| Calculated for $C_{22}H_{19}NO_3ClF$: | C66.1; | H4.8; | N3.5% |
| Found: | C65.7; | H4.9; | N3.2% |

## Example 1A

*Preparation of starting acid for Example 1 ((1S,1R,cis)(E/Z)-3-(2-chloro-2-fluorovinyl)-2,2-dimethyl-1-cyclopropanecarboxylic acid)*

Dichlorofluoromethane was dissolved in 100 ml sodium-dried hexane at 0°C. The dichlorofluoromethane (7.2 g; 0.07 mol) solution was added with stirring over 20 minutes at 0°C under nitrogen to a flask containing 100 ml dry hexane, potassium tertiary butoxide (7.85 g; 0.07 mol) and triphenylphosphine (18.3 g; 0.07 mol). The flask was allowed to warm to 15°C and then a hexane solution of (1S,2R)-*cis*-caronaldehyde methyl ester (10.0 g; 0.064 mol) added over 15 minutes. The nitrogen was removed and the flask heated at 55°C for 1 hour. The reactants were then allowed to stand overnight. A brown precipitate was then filtered from a brown oil. The oil was distilled to yield 9.2 g of a colourless oil and by GLC this was shown to be composed of starting aldehyde and 2 higher boiling components.

A saturated solution of sodium metabisulphite in water was prepared. To 50 ml of this solution was added 35 ml of industrial methylated spirit and then sufficient water to form a clear solution. This solution was added to an ether solution of the oil recovered above and the mixture stirred at room temperature for 0.5 hours. GLC confirmed the formation of a bisulphite-addition compound and complete removal of aldehyde starting material. The organic layer was separated, washed with water, dried and evaporated to yield 3.3 g of (1S,1R,*cis*)(E/Z)-3-(2-chloro-2-fluorovinyl)-2,2-dimethyl-1-cyclopropane carboxylic acid methyl ester (25% yield).

The ester (3.3 g) was hydrolysed to the free acid using ethanol and 2N-sodium hydroxide to yield 2.6 g acid (84%).

## Examples 2—7

The following compounds were prepared using procedures similar to those shown in Examples 1 and 1A (see Table I).

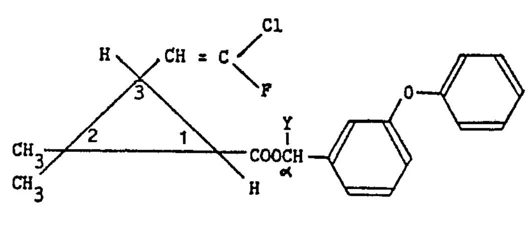

TABLE I

| Example | Y | Configuration at: $C_1$ and $C_3$ | $C_{alpha}$ | Double Bond | Refractive Index |
|---|---|---|---|---|---|
| 2 | H | (1S,1R, *cis*) | – | E/Z | $n_D^{20}$ 1.555 |
| 3 | H | (1S, 1R, *trans*) | – | E/Z | $n_D^{20}$ 1.553 |
| 4 | CN | (1S, 1R, *trans*) | (R, S) | E/Z | $n_D^{20}$ 1.552 |
| 5 | CN | (1R, *cis*) | (R, S) | E/Z | $n_D^{20}$ 1.550 |
| 6 | H | (1R, *cis*) | – | E/Z | $n_D^{21}$ 1.553 |
| 7 (a) | C≡CH | (1S, 1R, *cis*) | (R, S) | E/Z | $n_D^{18}$ 1.555 |

(a) in the preparation of this compound the acid chloride of (1S, 1R, *cis*) (E/Z)-3-(2-chloro-2-fluorovinyl)-2,2-dimethylcyclopropanecarboxylic acid was reacted with (R, S)-alpha-ethynyl-3-phenoxybenzyl alcohol in the presence of N-methylimidazole.

TABLE I (Continued)

| Example | Analysis |
|---|---|
| 2 | Calculation for $C_{21}H_{20}O_3ClF$ : C 67.3; H 5.4%<br>Found : C 67.0; H 5.4% |
| 3 | Calculation for $C_{21}H_{20}O_3ClF$ : C 67.3; H 5.4%<br>Found : C 67.5; H 5.4% |
| 4 | Calculation for $C_{22}H_{19}NO_3ClF$: C 66.1; H 4.8%<br>Found : C 66.6; H 5.1% |
| 5 | Calculation for $C_{22}H_{19}NO_3ClF$: C 66.1; H 4.8; N 3.5%<br>Found : C 65.6; H 4.9; N 3.2% |
| 6 | Calculation for $C_{21}H_{20}O_3ClF$ : C 67.3; H 5.4%<br>Found : C 67.1; H 5.4% |
| 7 (a) | Calculation for $C_{23}H_{20}O_3ClF$ : C 69.3; H 5.1%<br>Found : C 69.7; H 5.5% |

Example 8

*Acaricidal activity of the cyclopropyl carboxylate composition*

(a) *Activity against one-host cattle tick, Boophilus microplus (B.m.)*

Two to three week old larval ticks were used. In the rearing procedure calves were infested with larval ticks which matured over a three week period. Engorged adult female ticks which detach from the calf were collected and placed in 7.6 cm x 2.5 cm glass tubes. Egg batches were laid by the females over the next few days and larvae emerged three weeks later. The cyclopropyl carboxylates were formulated as solutions or fine suspensions in acetone containing 10% by weight of polyethylene glycol having an average molecular weight of 400. The formulations contained 0.1% by weight of the compound to be tested. 1 ml of the above-mentioned solution was applied evenly to a filter paper situated inside a petri dish. After tha paper was sufficiently dry it was folded in half and partly crimped along the outer edge to form a packet. About 80—100 larval ticks (Boophilus microplus) were transferred into the packet which was sealed completely. The packets were placed inside an incubator, maintained at 27°C and 80% relative humidity. After 24 hours the packets were opened and the percentage of dead and moribund larvae assessed.

(b) *Activity against glasshouse red spider mite, Tetranychus urticae (T.u.)*

The cyclopropyl carboxylates were formulated as solutions or suspensions in water containing 20% by weight of acetone and 0.05% by weight of Triton X100 as wetting agent ("Triton" is a trade mark). The formulations contained 0.4% by weight of the compound to be tested. Leaf discs cut from French bean plants were held on moist filter paper placed on a lid inside a waxed carton. Prior to testing, each leaf disc was infested with 10 adult mites. The mites and discs were then sprayed using a logarithmic spraying machine and held under standard glasshouse conditions. After 24 hours the percentage dead and moribund mites were assessed.

In (a) and (b) the concentration of material expected to kill 50% of the exposed group of test species was calculated ($LC_{50}$) and the toxicity of the compound was compared with that of the standard (parathion) and expressed as a Toxicity Index (T.I.)

$$\text{Toxicity Index} = \frac{LC_{50} \text{ of standard}}{LC_{50} \text{ of test compound}} \times 100$$

The $LC_{50}$ used for the standard in this calculation was the mean value based on 20 determinations. The results are given in Table II.

For reasons of comparison, similar results are included for the known compounds permethrin and cypermethrin which are disclosed in United Kingdom Patent Specification 1,413,491 as Compound P21H and Compound P21P.

TABLE II – ACARICIDAL RESULTS

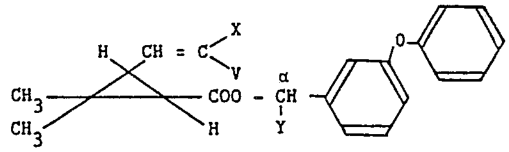

| Example | Compound | | | Configuration at | | |
|---|---|---|---|---|---|---|
| | X | V | Y | $C_1$ and $C_3$ | $C_{alpha}$ | Double Bond |
| 1 | Cl | F | CN | (1S, 1R, *cis*) | (R, S) | E/Z |
| 4 | Cl | F | CN | (1S, 1R, *trans*) | (R, S) | E/Z |
| 5 | Cl | F | CN | (1R, *cis*) | (R, S) | E/Z |
| cypermethrin | Cl | Cl | CN | (1S, 1R, *cis*, *trans*) | (R, S) | – |
| 2 | Cl | F | H | (1S, 1R, *cis*) | – | E/Z |
| 3 | Cl | F | H | (1S, 1R, *trans*) | – | E/Z |
| 6 | Cl | F | H | (1R, *cis*) | – | E/Z |
| permethrin | Cl | Cl | H | (1S, 1R, *cis*, *trans*) | – | – |
| 7 | Cl | F | –C≡CH | (1S, 1R, *cis*) | (R, S) | E/Z |

TABLE II – ACARICIDAL RESULTS (Continued)

| Example | Toxicity Index | |
|---|---|---|
| | *Boophilus microplus* | *Tetranychus urticae* |
| 1 | 132 | 5 |
| 4 | 25 | 8 |
| 5 | 560 | 10 |
| cypermethrin | 21 | 2 |
| 2 | 940 | 8 |
| 3 | 65 | 3 |
| 6 | 3150 | 26 |
| permethrin | 223 | 1 |
| 7 | – | 16 |

It will be seen from the above results in Table I that in the Y=CN series, Examples 1, 4 and 5 all possess superior acaricidal activity over the known compound cypermethrin and that in the Y=H series, Examples 2, 3 and 6 generally produce better results than the corresponding known compound permethrin. Example 7 also produces better acaricidal effects over permethrin and cypermethrin.

**Claims**

1. Cyclopropyl carboxylate compounds in the form of single isomers or combinations thereof characterized in that they have a general formula:—

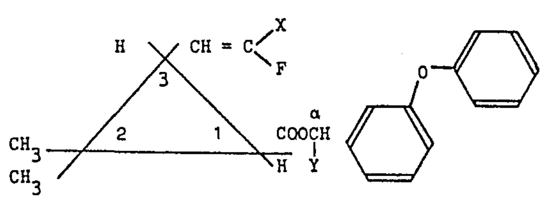

(I)

wherein X is a chlorine, bromine or iodine group and Y is a hydrogen atom or a cyano or ethynyl group.

2. Compounds according to claim 1 characterized in that X is a chlorine atom.

3. Compounds according to claim 1 or 2 characterized in that they have a configuration at carbon atoms 1 and 3 of (1R,1S,*cis*) or (1R,*cis*).

4. Process for the manufacture of compounds of the general formula I characterized in that a compound of formula:—

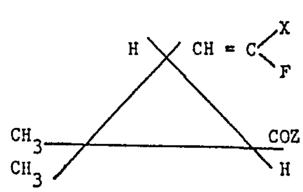

(II)

is reacted with a compound of formula:—

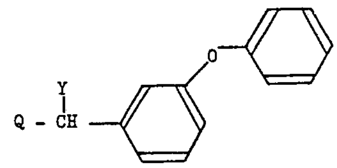

(III)

wherein X and Y are as defined in claim 1; one of the groups Q and Z represents a halogen atom, and the other represents a hydroxy group.

5. Pesticidal composition for controlling acarid and/or insect pests characterized in that the active ingredient is a compound claimed in any one of claims 1 to 3.

6. Use of a compound as claimed in any one of claims 1 to 3 as pesticide for controlling acarid and/or insect pests.

**Revendications**

1. Esters d'acides cyclopropanecarboxyliques sous la forme d'isomères isolés ou de leurs combinaisons caractérisés en ce qu'ils ont une formule générale:

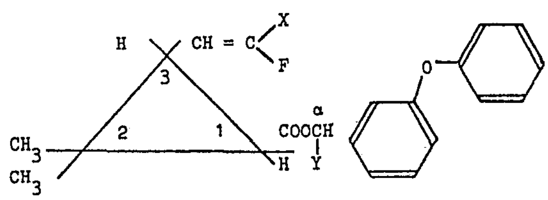

(I)

dans laquelle X est un atome de chlore, de brome ou d'iode et Y est un atome d'hydrogène ou un groupe cyano ou ethynyle.

2. Composés selon la revendication 1, caractérisés en ce que X est un atome de chlore.

3. Composés selon l'une des revendications 1 ou 2, caractérisés en ce qu'ils ont un configuration aux atoms de carbone 1 et 3 qui est (1R,1S,*cis*) ou (1R,*cis*).

4. Procédé pour la préparation de composés de la formule générale 1, caractérisé en ce qu'un composé de formule:

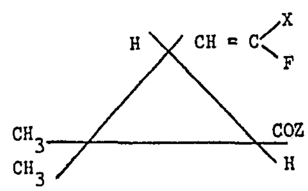

(II)

est mis à réagir avec un composé de formule

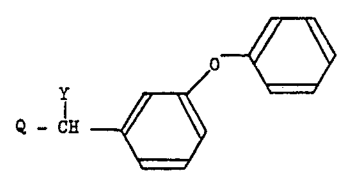

(III)

où X et Y sont tels que définis dans la revendication 1; un des groupes Q et Z représente un atome d'halogène et l'autre représente un groupe hydroxy.

5. Composition pesticide pour lutter contre des acariens et/ou des insectes nuisibles, caractérisée en ce que l'ingrédient actif est un composé tel que revendiqué dans l'une quelconque des revendications 1 à 3.

6. Utilisation d'un composé tel que revendiqué dans l'une quelconque des revendications 1 à 3 pour lutter contre des acariens et/ou des insectes nuisibles.

**Patentansprüche**

1. Cyclopropylcarbonsäureester in der Form einzelner Isomeren oder Kombinationen davon, dadurch gekennzeichnet, dass sie eine allgemeine Formel

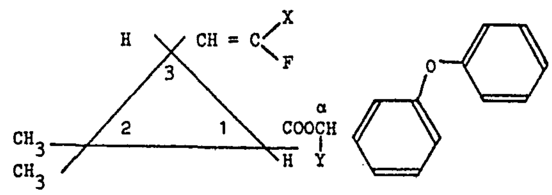

(I)

haben, in der X ein Chlor-, Brom- oder Jodatom ist und Y ein Wasserstoffatom oder eine Cyan- oder Äthinylgruppe ist.

2. Verbindungen nach Anspruch 1, dadurch gekennzeichnet, dass X ein Chloratom ist.

3. Verbindungen nach Anspruch 1 oder 2, dadurch gekennzeichnet, dass sie eine Konfiguration an den Kohlenstoffatomen 1 und 3 von (1R,1S,*cis*) oder (1R,*cis*) aufweisen.

4. Verfahren zur Herstellung von Verbindungen der allgemeinen Formel I, dadurch gekennzeichnet, dass eine Verbindung der Formel

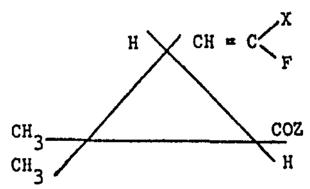

(II)

umgesetzt wird mit einer Verbindung der Formel

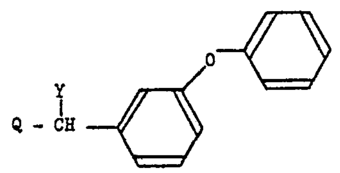

(III)

in der X und Y wie in Anspruch 1 definiert sind, eine der Gruppen Q und Z ein Halogenatom bedeutet und die andere Gruppe für eine Hydroxygruppe steht.

5. Pestizides Mittel zur Bekämpfung von Milben und/oder Insektenschädlingen, dadurch gekennzeichnet, dass der Wirkstoff eine Verbindung nach einem der Ansprüche 1 bis 3 ist.

6. Verwendung einer Verbindung, die in einem der Ansprüche 1 bis 3 beansprucht ist als Schädlingsbekämpfungsmittel für Milben und/oder Schadinsekten.